# NEUE EUROPÄISCHE PATENTSCHRIFT

(11) **EP 1 177 841 B2**
(45) Veröffentlichungstag und Bekanntmachung des Hinweises auf die Entscheidung über den Einspruch: **18.04.2012**
(45) Hinweis auf die Patenterteilung: 26.05.2004
(21) Anmeldenummer: 00116783.2
(22) Anmeldetag: 03.08.2000
(51) Int. Cl.: B08B 9/032

(54) **Verfahren zum Reinigen von UHT-Anlagen**
Method for cleaning ultra-high temperature installations
Procédé pour nettoyer des installations à ultra-haute température

(43) Veröffentlichungstag der Anmeldung: 06.02.2002
(73) Patentinhaber: Chemische Fabrik Dr. Weigert GmbH & Co KG, 20539 Hamburg (DE)
(72) Erfinder: Lensch, Jan, 23826 Bark (DE)
(74) Vertreter: Glawe, Delfs, Moll

(56) Entgegenhaltungen:
- EP-A- 0 772 971
- WO-A-98/15437
- US-A- 4 061 504
- US-A- 5 348 058

## Beschreibung

Die Erfindung betrifft ein Verfahren zur Reinigung einer UHT-Anlage für fließfähige Lebensmittel.

Ultrahochtemperatur(UHT)-Anlagen werden in vielen Bereichen der Lebensmittel- bzw. Nahrungsmittelindustrie insbesondere zur Erzielung einer höheren Dauerhaltbarkeit verwendet. Fließfähige Lebensmittel wie bspw. Milch, Milchprodukte, Fruchtsäfte oder dergleichen werden darin kurzzeitig auf eine Temperatur von über 100°C erhitzt. In der Regel durchströmen die fließfähigen Lebensmittel Röhrenwärmetauscher, in denen sie kurzzeitig auf die gewünschte Temperatur erhitzt werden.

Die Reinigung solcher UHT-Anlagen ist problematisch, da die hohen Temperaturen insbesondere bei proteinhaltigen Lebensmitteln schwer zu entfernende Anbrennungen entstehen lassen. Im Stand der Technik werden UHT-Anlagen daher mittels einer sogenannten verlorenen CIP-Reinigung gesäubert. In die Anlage wird Frischwasser eingeführt, in diesen Frischwasserstrom wird ein Reinigerkonzentrat eindosiert zur Einstellung der gewünschten Reinigungsmittelkonzentration. Die so in situ hergestellte Reinigungslösung wird im üblichen CIP(cleaning in place)-Verfahren durch die UHT-Anlage geführt und nach Abschluß der Reinigung verworfen. Diese verlorene Reinigung bewirkt einen hohen Reinigungsmittelverbrauch sowie hohen Energiebedarf für die Erwärmung der CIP-Reinigungslösung.
EP-A-0 772 971 offenbart ein Verfahren zum Reinigen von Melkanlagen mit den Schritten:
a) Vorspülen mit Retourwasser, das wiederaufgefangene saure Desinfektionslösung enthält;
b) Reinigen mit einer alkalischen Reinigerlösung;
c) Desinfizieren mit einer sauren Desinfektionslösung und
d) Auffangen der gebrauchten Desinfektionslösung in einem Retourwasserbehälter.

Somit wird in diesem Stand der Technik gebrauchte Desinfektionslösung als Vorspüllösung wieder verwendet.

Der Erfindung liegt die Aufgabe zugrunde, ein effizienteres Reinigungsverfahren für CIP-Verfahren zu schaffen.

Die Erfindung löst diese Aufgabe durch ein Verfahren mit den Schrittene des Anspruchs 1.

Zunächst seien einige im Rahmen der Erfindung verwendete Begriffe erläutert.

In einem Vorratsbehälter wird Reinigungslösung vorgelegt. Es handelt sich dabei um gebrauchsfertige Reinigungslösung, die zur Anwendung nicht weiter verdünnt werden muß. Sie ist vorzugsweise bereits auf die vorgesehene Reinigungstemperatur (üblicherweise etwa 80°C erwärmt, alternativ kann sie während der Reinigung durch eine Heizeinrichtung der CIP-Anlage erwärmt werden. Vorlegen im Sinne der Erfindung bedeutet, daß bei einer erstmaligen Inbetriebnahme der Anlage ein entsprechendes Volumen Reinigungslösung eingefüllt wird. Im laufenden Betrieb bedeutet vorlegen, daß in unten noch näher erläuterter Weise die Reinigungslösung vor der Anwendung wieder auf das erforderliche Volumen aufgefüllt und aufgeschärft wird.

Im Rahmen der Erfindung bezeichnet der Begriff UHT-Anlage jegliche Anlage, in der fließfähige Lebens- oder Nahrungsmittel auf Temperaturen von wenigstens 100°C erwärmt werden. Bei ultrahocherhitzter Milch ist bspw. eine Erwärmung auf wenigstens 136°C vorgeschrieben. Ein bevorzugter Temperaturbereich für UHT-Anlagen liegt bei 120 bis 140°C.

Von der Reinigungslösung in dem Vorratsbehälter wird ein erster Teil abgenommen und damit die UHT-Anlage gereinigt. Dieses Reinigen geschieht im üblichen CIP-Verfahren, in der Regel wird das abgenommene Teilvolumen mehrfach in der UHT-Anlage im Kreis geführt. Dieser erste Teil der Reinigungslösung entfernt grobe Verunreinigungen und wird anschließend mitsamt diesen gelösten Verunreinigungen verworfen.

Anschließend wird die UHT-Anlage mit einem zweiten Teil der Reinigungslösung aus dem Vorratsbehälter gereinigt. Das Volumen dieses zweiten Teils ist vorzugsweise größer als das Volumen des ersten Teils, das Volumen dieses zweiten Teils beträgt vorzugsweise etwa das 1,5- bis 5fache, besonders bevorzugt etwa das 2fache des verworfenen ersten Teils. Mit diesem zweiten Teil der Reinigungslösung wird ebenfalls eine CIP-Reinigung der UHT-Anlage durchgeführt. Nach Abschluß dieses Reinigungsschritts wird der benutzte zweite Teil der Reinigungslösung in dem Vorratsbehälter wieder aufgefangen, also zurückgestapelt. Dieser zweite Teil ist nur noch in geringerem Maße mit Verunreinigungen belastet, da der größte Teil des Schmutzes zusammen mit dem ersten Teil der Reinigungslösung verworfen wurde.

Die UHT-Anlage wird anschließend mit Frischwasser gespült. Dieses Spülwasser oder ein Teil davon wird in dem Vorratsbehälter aufgefangen, um das durch das Verwerfen des ersten Teils der Reinigungslösung verlorene Volumen auszugleichen. Nach diesem Volumenausgleich im Vorratsbehälter durch aufgefangenes Spülwasser wird durch Zugabe von Reinigungsmittel die Reinigungslösung wieder auf die gewünschte Konzentration aufgeschärft.

Die Erfindung hat erkannt, daß auch bei hartnäckigen Verunreinigungen einer UHT-Anlage eine wasser-, reinigungsmittel- und energiesparende Stapelreinigung dann durchgeführt werden kann, wenn man in einem ersten Schritt mit einem vorzugsweisen geringeren Volumen Reinigungslösung eine verlorene Reinigung durchführt, um grobe Anschmutzungen zu entfernen. Der anschließend in die UHT-Anlage eingeführte zweite Teil der Reinigungslösung muß nur noch einen deutlich geringen Teil Restschmutz aufnehmen, diese Schmutzbelastung ist hinreichend klein, so daß dieser zweite Teil der Reinigungslösung gestapelt und wiederverwendet werden kann. Die gestapelte Reinigungslösung im Vorratsbehälter wird durch Abnehmen und Verwerfen des ersten Teils der Reinigungslösung und anschließendes Auffüllen mit Spülwasser ständig aufgefrischt (und anschließend aufgeschärft), so daß im Normalbetrieb ihr Schmutztragevermögen nicht überschritten wird.

Der Vorratsbehälter ist vorzugsweise wärmeisoliert, so daß die thermische Energie aufgefangener Reinigungslösung im nächsten Reinigungsgang wieder genutzt werden kann. Auch das aufgefangene Spülwasser kommt in der Regel erwärmt aus der Anlage. Bspw. müssen UHT-Anlagen in der milchverarbeitenden Industrie üblicherweise alle 12 h gereinigt werden, so daß die Wärmeisolierung des Vorratsbehälters hinreichend sein sollte, in diesem Zeitraum allenfalls einen geringen Teil der thermischen Energie des Inhalts des Vorratsbehälters entweichen zu lassen.

Die verwendete Reinigungslösung kann sauer oder alkalisch sein. Geeignete Reinigungslösungen sind dem Fachmann geläufig und bspw. in EP-A-0 772 971 offenbart. Der Inhalt dieser Schrift wird durch Bezugnahme darauf zum Gegenstand auch der vorliegenden Offenbarung gemacht.

Alkalische und saure Reinigung können auch miteinander kombiniert werden. So kann der in Anspruch 1 beschriebene Reinigungszyklus zunächst mit alkalischer und dann mit saurer Reinigungslösung oder umgekehrt durchgeführt werden. In diesem Fall sind zwei Vorratsbehälter für saure bzw. alkalische Reinigungslösung vorgesehen. Im Rahmen der Erfindung ist es auch möglich, an einen erfindungsgemäß mit alkalischer Reinigungslösung ausgeführtem Reinigungszyklus zusätzlich eine verlorene saure Reinigung anzuschließen. In diesem Fall wird nach Abschluß des alkalischen Zyklus die UHT-Anlage mit einer vorzugsweise in situ (d.h. durch Einspeisen von Konzentrat in einen Frischwasserstrom) erzeugten sauren Reinigungslösung gereinigt, die anschließend verworfen wird. In diesem Fall ist kein separater Vorratsbehälter für die saure Reinigungslösung erforderlich.

Das Volumen der Spüllösung bzw. des Spülwassers ist mindestens so groß wie das Volumen des verworfenen ersten Teils der Reinigungslösung, so daß der Vorratsbehälter mit dem gesamten Spülwasser oder einem Teil davon wieder auf das vorgesehene Ursprungsvolumen aufgefüllt werden kann. Besonders bevorzugt ist es im Rahmen der Erfindung, wenn der Vorratsbehälter ein Volumen von drei Teilen aufweist, ein Teil abgenommen wird zur Durchführung des ersten verlorenen Reinigungsschrittes, anschließend die Stapelreinigung mit den verbleibenden zwei Teilen des Inhalts des Vorratsbehälters durchgeführt wird (diese beiden Teile werden wieder aufgefangen) und im nächsten Schritt ein Spülen mit einem Teil Frischwasser durchgeführt wird, mit dem anschließend der Inhalt des Vorratsbehälters wieder auf drei Teile ergänzt wird.

Die Aufzählung der Schritte des erfindungsgemäßen Verfahrens in Anspruch 1 ist nicht abschließend. Dem erfindungsgemäßen Verfahren können weitere Schritte vor, zwischen oder nachgeschaltet sein, insbesondere ein Vorspülen bspw. mit Frischwasser, ein Zwischenspülen zwischen alkalischer und saurer Reinigung oder ein weiteres Nachspülen.

Erfindungsgemäß ist es möglich, die Einspeisung von Reinigungs- und/oder Spüllösung bereits in die Produktzufuhrleitungen der UHT-Anlage vorzunehmen und diese damit gleich mit zu reinigen. Ebenfalls in den CIP-Reinigungskreislauf einbezogen werden kann ein etwaiger Steriltank, der als Puffertank zwischen der UHT-Anlage und bspw. einer nachgeschalteten Abfüllanlage dienen kann.

Ein Ausführungsbeispiel der Erfindung wird im folgenden anhand der Zeichnung beschrieben.

Eine übliche UHT-Anlage 1 wird im Erhitzungsbetrieb aus einem Produkttank 2 über ein Dreiwegeventil 3 mit einem zu erhitzenden Produkt wie bspw. Milch gespeist.

Eine angeschlossene CIP-Anlage weist einen Vorratstank 6 für alkalisch eingestellte anwendungsfertige Reinigungslösung und einen Vorratstank 7 für sauer eingestellte anwendungsfertige Reinigungslösung auf. Die Tanks 6, 7 sind mit.zugehörigen Vorratsbehältern 8, 9 für ein entsprechendes alkalisches bzw. saures Reinigerkonzentrat verbunden. Über Leitungen 10, 11 können sie aus dem Frischwassertank 4 mit Frischwasser nachgefüllt werden. Umwälzleitungen 12, 13 mit darin angeordnete Pumpen und Leitfähigkeitsmeßsensoren 14, 15 dienen der gleichmäßigen Durchmischung des Tankinhalts nach dem Aufschärfen mit Reinigerkonzentrat. Eine gleichmäßige Durchmischung ist erreicht, wenn die Leitfähigkeitssensoren 14, 15 keine oder allenfalls noch geringe Änderungen der Leitfähigkeit im Verlauf des Umpumpens zeigen.

Die Tanks 6 und 7 weisen bevorzugt das 1,5- bis 2-fache des Anlagenvolumens der UHT-Anlage auf. Wenn also bspw. die UHT-Anlage 1 bei einer CIP-Reinigung mit 1000 1 Reinigungslösung gefüllt wird, weisen die Tanks 6, 7 bevorzugt je ein Volumen von 1500 l bis 2000 l auf.

Zum Reinigen der UHT-Anlage wird diese über das Dreiwegeventil 3 statt mit dem Produkttank 2 mit der CIP-Reinigungsanlage verbunden. Üblicherweise wird zunächst ein kurzes Vorspülen mit Frischwasser aus dem Frischwassertank 4 vorgenommen, um Produktreste aus der UHT-Anlage zu entfernen. Dieses Vorspülen wird in der Regel als verlorenes Vorspülen durchgeführt, d. h. die Vorspülflüssigkeit wird über die Leitung 5 in die Kanalisation verworfen. Bei diesem Vorspülen werden auch Produktreste aus der Produktzufuhrleitung 16 der UHT-Anlage 1 entfernt.

Nach dem Vorspülen der UHT-Anlage 1 mit Frischwasser wird alkalische Reinigungslösung aus dem Tank 6 in die UHT-Anlage 1 gepumpt. Beim Befüllen der UHT-Anlage mit Reinigungslösung wird das darin befindliche Flüssigkeitsvolumen über die Leitung 5 in die Kanalisation gedrückt. Wenn der Leitfähigkeitssensor 17 anzeigt, daß die alkalische Reinigungslösung bereits aus der UHT-Anlage 1 austritt, wird die UHT-Anlage 1 solange weiter aus dem Tank 6 mit Reinigungslösung befüllt, bis eine definierte Menge Reinigungslösung im Wege der verlorenen Reinigung in die Kanalisation ausgedrückt worden ist. Diese definierte Menge beträgt bevorzugt etwa die Hälfte des Volumens der UHT-Anlage 1, im oben angegebenen Beispiel also 500 l. Mit diesem verlorenen Reinigungsschritt wird ein erheblicher Teil der Verunreinigungen der UHT-Anlage 1 in die Kanalisation gespült.

Nach dem Ausdrücken dieses definierten Volumens wird der in der UHT-Anlage 1 sowie im CIP-Reinigungskreislauf befindliche Volumenteil Reinigungslösung in bekannter Weise im Kreislauf umgepumpt (die Pumpen sind in der Zeichnung nicht dargestellt). Dies geschieht bspw. für einen Zeitraum von etwa 30 Minuten, um so eine weitestgehend vollständige Entfernung aller Verunreinigungen zu erreichen. Der CIP-Reinigungskreislauf umfaßt die UHT-Anlage 1, den Tank 6 und die zugehörigen Verbindungsleitungen einschließlich des Ventils 18, das zum Rückführen des Kreislaufvolumens in den Tank 6 geöffnet wird. Es können gleichfalls in der Zeichnung nicht dargestellte Einrichtungen zum Erwärmen der Lösung während des Umpumpens sein, um die bevorzugte Reinigungstemperatur von bspw. etwa 80 °C zu halten bzw. zu erreichen.

Nach Abschluß dieses CIP-Reinigungsschrittes wird die Reinigungslösung mittels Frischwasser aus dem Tank 4 über das Ventil 18 in den Tank 6 zurückgedrückt (zurückgestapelt). Mit Hilfe des Leitfähigkeitssensors 17 läßt sich erkennen, wann das Zurückstapeln beendet ist und nur noch Mischphasen bzw. Frischwasser aus der UHT-Anlage 1 austreten. Die Mischphasen werden bevorzugt über die Leitung 5 in die Kanalisation verworfen.

Im Tank 6 befindet sich jetzt gebrauchte (zurückgestapelte) Reinigungslösung. Um den Volumenverlust des ersten verlorenen Reinigungsschrittes mit alkalischer Reinigungslösung auszugleichen, wird aus dem Frischwassertank 4 über die Leitung 10 ein entsprechendes Volumen Frischwasser in den Tank 6 gepumpt. Anschließend wird die Umwälzpumpe in der Umpumpleitung 12 in Gang gesetzt. Aus dem Konzentratbehälter 8 wird alkalisches Reinigerkonzentrat solange nachdosiert, bis der Leitfähigkeitssensor 14 das Vorliegen der gewünschten Reinigerkonzentration in der Reinigungslösung 6 anzeigt. Dann ist die alkalische Reinigerlösung im Tank 6 für den nächsten alkalischen Reinigungsschritt (nach der anschließenden Benutzung der UHT-Anlage) bereit. Bevorzugt ist der Tank 6 mit einer Wärmeisolierung versehen, so daß die gewünschte Temperatur der Reinigungslösung in den Reinigungspausen weitgehend erhalten bleibt. Eine Heizeinrichtung kann vorgesehen sein, um den Tankinhalt auf eine gewünschte Temperatur zu erwärmen.

Die UHT-Anlage 1 ist jetzt vorgespült, alkalisch gereinigt und mit Frischwasser nachgespült. Die UHT-Anlage kann jetzt wieder in Betrieb genommen werden, alternativ kann sich eine saure Reinigung mit Reinigungslösung aus dem Tank 7 anschließen, die in gleicher Weise durchgeführt wird wie vorstehend beschriebene alkalische Reinigung. Es ist gleichfalls möglich, saure und alkalische Reinigung abwechselnd jeweils nach einer Benutzung der UHT-Anlage oder in einem vorbestimmten Zyklus vorzunehmen.

In die Konzentratbehälter 8, 9 einzufüllende alkalische und saure Reinigerkonzentrate sind dem Fachmann geläufig und bedürfen hier keiner näheren Erläuterung. Rezepturbeispiele sind wie folgt:
Alkalisches Reinigerkonzentrat:
   22,5 % KOH (entspricht 16,1 % Gesamtalkaligehalt als NaOH errechnet),
   10 % Pentakaliumtriphosphat K₅P₃O₁₁ (entspricht 4,76 % P₂O₅),
   2 % Nitrilotriessigsäure,
   3,5 % Glukonsäure,
   1 % Phosphonobutantricarbonsäure,
   1 % Capryliminodipropionsäure-Natriumsalz,
   Rest auf 100 % Wasser
Saures Reinigerkonzentrat:
   3 % Peressigsäure,
   18 % Schwefelsäure,
   22 % Wasserstoffperoxid,
   Rest auf 100 % Wasser

Die Reinigungslösungen in den Tanks 6, 7 enthalten bevorzugt 0,1 bis 2 Gew.-%, besonders bevorzugt etwa 1 % der jeweiligen Reinigerkonzentrate.

## Patentansprüche

1. Verfahren zur Reinigung einer UHT-Anlage (1) für fließfähige Lebensmittel, mit den Schritten:
a) Vorlegen einer Reinigungslösung in einem Vorratsbehälter (6, 7) ,
b) Reinigen der UHT-Anlage (1) mit einem ersten Teil der Reinigungslösung,
c) Verwerfen dieses ersten Teils der Reinigungslösung,
d) Reinigen der UHT-Anlage (1) mit einem zweiten Teil der Reinigungslösung,
e) Zurückstapeln dieses zweiten Teils in den Vorratsbehälter (6,7),
f) Spülen der UHT-Anlage (1) mit Frischwasser,
g) Auffangen wenigstens eines Teils der Spüllösung aus Schritt f) in dem Vorratsbehälter (6,7),
h) Aufschärfen der Lösung im Vorratsbehälter (6,7) mit Reinigungsmittel,
wobei das Volumen des ersten Teils der Reinigungslösung (Schritt b)) kleiner oder gleich dem Volumen der Spüllösung (Schritt f)) ist.

2. Verfahren nach Anspruch 1, **dadurch gekennzeichnet, dass** der Vorratsbehälter (6,7) wärmeisoliert ist.

3. Verfahren nach Anspruch 1 oder 2, **dadurch gekennzeichnet, dass** die Reinigungslösung sauer ist.

4. Verfahren nach Anspruch 1 oder 2, **dadurch gekennzeichnet, dass** die Reinigungslösung alkalisch ist.

5. Verfahren nach Anspruch 1 oder 2, **dadurch gekennzeichnet, dass** zwei Vorratsbehälter (6,7) vorgesehen sind und die Schritte a) bis h) zunächst mit alkalischer und dann mit saurer Reinigungslösung durchgeführt werden.

6. Verfahren nach Anspruch 4, **dadurch gekennzeichnet, dass** im Anschluss an die alkalische Reinigung eine verlorene saure Reinigung durchgeführt wird.

## Claims

1. Method for cleaning a UHT installation (1) for flowable foods comprising the steps:
a) placing a cleaning solution in a storage vessel (6,7),
b) cleaning the UHT installation (1) with a first portion of the cleaning solution,
c) discarding this first portion of the cleaning solution,
d) cleaning the UHT installation (1) with a second portion of the cleaning solution,
e) recirculating this second portion to the storage vessel (6,7),
f) rinsing the UHT installation (1) with fresh water,
g) collecting at least a portion of the rinse solution in step f) in the storage vessel (6,7),
h) fortifying the solution in the storage vessel (6,7) with cleaning agent,
wherein the volume of the first portion of the cleaning solution (step b)) is less than or equal to the volume of the rinse solution (step f)).

2. Method according to Claim 1, **characterized in that** the storage vessel (6,7) is heat-insulated.

3. Method according to Claim 1 or 2, **characterized in that** the cleaning solution is acidic.

4. Method according to Claim 1 or 2, **characterized in that** the cleaning solution is alkaline.

5. Method according to Claim 1 or 2, **characterized in that** two storage vessels (6,7) are provided and the steps a) to h) are carried out first with alkaline cleaning solution and then with acidic cleaning solution.

6. Method according to Claim 4, **characterized in that**, following the alkaline cleaning, a single-service acidic cleaning is carried out.

## Revendications

1. Procédé pour le nettoyage d'une installation UHT (1) pour produits alimentaires fluides, comportant les étapes suivantes :
a) mise en place d'une solution de nettoyage dans un réservoir (6, 7),
b) nettoyage de l'installation UHT (1) avec une première partie de la solution de nettoyage,
c) rejet de cette première partie de la solution de nettoyage,
d) nettoyage de l'installation UHT (1) avec une deuxième partie de la solution de nettoyage,
e) renvoi par refoulement de cette deuxième partie dans le réservoir (6, 7),
f) rinçage de l'installation UHT (1) avec de l'eau douce,
g) recueil d'au moins une partie de la solution de rinçage provenant de l'étape f) dans le réservoir (6, 7),
h) ajustement de la concentration de la solution dans la réservoir (6, 7) avec le produit nettoyant,
le volume de la première partie de la solution de nettoyage (étape b)) étant inférieur ou égal au volume de la solution de rinçage (étape f)).

2. Procédé selon la revendication 1, **caractérisé en ce que** le réservoir (6, 7) est calorifugé.

3. Procédé selon la revendication 1 ou 2, **caractérisé en ce que** la solution de nettoyage est acide.

4. Procédé selon la revendication 1 ou 2, **caractérisé en ce que** la solution de nettoyage est alcaline.

5. Procédé selon la revendication 1 ou 2, **caractérisé en ce que** deux réservoirs (6, 7) sont prévus, et les étapes a) à h) sont mises en oeuvre d'abord avec une solution de nettoyage alcaline, puis avec une solution de nettoyage acide.

6. Procédé selon la revendication 4, **caractérisé en ce qu'**un nettoyage acide perdu est mis en oeuvre après le nettoyage alcalin.
